# EUROPÄISCHE PATENTSCHRIFT

(11) **EP 2 650 068 B1**
(45) Veröffentlichungstag und Bekanntmachung des Hinweises auf die Patenterteilung: **29.11.2017**
(21) Anmeldenummer: 13162890.1
(22) Anmeldetag: 09.04.2013
(51) Int. Cl.: B23B 31/30, B23B 31/117, B23B 31/20

(54) **Hydrodehnspannfutter**
Hydraulic collet chuck
Mandrin hydraulique pince de serrage

(30) Priorität: 13.04.2012 DE 102012206069; 23.08.2012 DE 102012215036
(43) Veröffentlichungstag der Anmeldung: 16.10.2013
(73) Patentinhaber: Gühring KG, 72458 Albstadt (DE)
(72) Erfinder: Teusch, Bruno, 73733 Esslingen (DE); Hakki, Aygün, 72505 Krauchenwies / Göggingen (DE)
(74) Vertreter: Winter, Brandl, Fürniss, Hübner, Röss, Kaiser, Polte - Partnerschaft mbB

(56) Entgegenhaltungen:
- DE-A1- 3 039 267
- DE-B3-102011 106 421
- DE-U1- 9 411 260
- DE-U1-202011 004 231
- US-A- 2 567 471
- US-A- 5 067 861

## Beschreibung

Die Erfindung betrifft ein Hydrodehnspannfutter mit einem in einem Spannfutterkörper integrierten Hydrodehnspannmechanismus, der eine Dehnspannbuchse mit einer durchgehenden zylindrischen Innenwand aufweist, und einer in der Dehnspannbuchse angeordneten Reduzierbuchse zur Aufnahme eines Schaftwerkzeugs, insbesondere Gewindebohrers.

Derartige Hydrodehnspannfutter sind z.B. aus der WO 2012/013629 A1 oder dem Produktkatalog 2009 der Anmelderin bekannt. Um mit einem derartigen Hydrodehnspannfutter hohe Drehmomente von bis zu 50 Nm auf das Schaftwerkzeug sicher übertragen zu können, wird herkömmlich ein durchgängig runder Schaft ohne seitliche Abflachungen mit einer Durchmessertoleranz im Bereich h6 empfohlen. Eine geringere Durchmessertoleranz kann dagegen das Drehmomentobertragungsvermögen erheblich reduzieren. So wurde festgestellt, dass bei einer Durchmessertoleranz im Bereich von h9 mit einem herkömmlichen Hydrodehnspannfutter nur mehr ein Drehmoment bis zu 15 Nm übertragen werden kann.

Des Weiteren wird insbesondere für Schäfte mit einer seitlichen Abflachung, z.B. gemäß DIN 6535 Form HB oder HE, und zur Überbrückung einer Durchmesserdifferenz zwischen dem (größeren) Innendurchmesser der Dehnspannbuchse und dem (kleineren) Außendurchmesser des Schafts eines im Hydrodehnspannfutter einzuspannenden Schaftwerkzeugs die Verwendung einer Reduzierbuche empfohlen. Eine herkömmliche Reduzierbuchse weist in einem axial mittigen Längenabschnitt eine Vielzahl von um den Umfang der Reduzierbuchse äquidistant verteilten Längsschlitzen auf, die eine in Umfangsrichtung gleichmäßige Verteilung der Dehnspannkraft von der Dehnbuchse des Hydrodehnmechanismus auf das in den in der Dehnbuchse aufgenommenen Schaftwerkzeug ermöglichen. Die Längsschlitze konzentrieren sich auf einen axial mittigen Längenabschnitt Eine derartige Reduzierbuchse kann das zulässig übertragbare Drehmoment gegenüber der Direktspannung steigern, sofern eine Schafttoleranz von h6 eingehalten wird.

Eine Durchmessertoleranz im Bereich von h6 ist allerdings für Gewindebohrerschäfte nicht üblich. Die Schäfte von Gewindebohrern sind herkömmlich mit einer Durchmessertoleranz im Bereich von h9 gefertigt. Bei Verwendung mit einem herkömmlichen Hydrodehnspannfutter ergibt sich daher für derartige Gewindebohrer ein deutlich verringertes Drehmomentübertragungsvermögen. Das Drehmomentübertragungsvermögen ließe sich grundsätzlich z.B. dadurch erhöhen, dass der Schaft des Gewindebohrers eine seitlichen Mitnahmefläche, z.B. gemäß der oben erwähnten DIN 6535 Form HB oder HE aufweist, und das Hydrodehnspannfutter z.B. nach dem Vorbild der in der oben erwähnten WO 2012/013629 A1 beschriebenen Lehre modifiziert wird. In dieser Druckschrift wird eine drehfeste Anordnung eines in einem Hydrodehnspannfutter eingespannten Schaftwerkzeugs in der Weise vorgeschlagen, dass eine im Grundkörper des Hydrodehnspannfutters radial verstellbar gehaltene und durch einen radialen Durchbruch in der Dehnbuchse geführte Mitnehmerschraube formschlüssig in Eingriff mit einer seitlichen Mitnahmefläche am Schaft des Schaftwerkzeugs gebracht wird. Eine derartige Modifizierung ist jedoch mit einem erheblichen konstruktiven und finanziellen Aufwand verbunden und zieht aufgrund der Gewindebohrung im Grundkörper eine Schwächung des Grundkörpers sowie aufgrund des radialen Durchbruchs in der Dehnbuchse eine ungleichmäßige Spannung des Schaftwerkzeugs nach sich.

Weitere Hydrodehnspannfutter mit einer Reduzierbuchse sind aus den Druckschriften DE 20 2011 004 231 U1, DE 94 11 260.6 U1, US 5,067,861, US 2,567,471, DE 30 39 267 A1 und DE 10 2011 106 421 B3 bekannt. Ein Hydrodehnspannfutter gemäß dem Oberbegriff des Anspruchs 1 ist aus DE 20 2011 004 231 U1 bekannt. Das in der DE 20 2011 004 231 U1 gezeigte und beschriebene Hydrodehnspannfutter hat eine Reduzierbuchse mit einem zylindrischen Büchsenkörper mit einer Spannbohrung. Aufgrund der Zylinderform ist der zylindrische Büchsenkörper im Spannfutterkörper formschlüssig aufgenommen. Des Weiteren ist ein Schaftwerkzeug in der Spannbohrung des Büchsenkörpers formbedingt formschlüssig aufgenommen. Bei einer Druckbeaufschlagung durch eine Druckkammer des Hydrodehnspannfutters wird daher eine kraftschlüssig drehfeste Verbindung der Reduzierbuchse mit dem Spannfutterkörper bzw. eine kraftschlüssig drehfeste Verbindung zwischen dem Schaftwerkzeug und der Reduzierbuchse erreicht.

Die DE 94 11 260.6 U1 zeigt und beschreibt ein Hydrodehnspannfutter mit einer hülsenförmigen Reduzierbuchse in einer Dehnspannbuchse. Um eine verdrehsichere Mitnahme eines Werkzeugschaftes zu erreichen, wird in dieser Druckschrift ein von der Reduzierbuchse unabhängig vorgesehener Mitnehmer vorgeschlagen, der mit einem aus der Reduzierbuchse ragenden axialen Ende des Werkzeugschaftes formschlüssig zusammenwirkt. Die Verspannung des Werkzeugschaftes in der Reduzierbuchse soll unabhängig von dem Mitnehmer in herkömmlicher Weise mit bewährten Spanntechniken erfolgen.

Die US 5,067,861 zeigt und beschreibt ein Hydrodehnspannfutter mit einer in einer Dehnspannbuchse aufgenommenen Reduzierbuchse, deren Querschnitt dem Querschnitt der Dehnspannbuchse entsprechen soll. Die Dehnspannbuchse kann abweichend von einem zylindrischen Querschnitt einen beliebigen, z.B. polygonalen, Querschnitt haben, wobei der Querschnitt der Dehnspannbuchse über deren Länge hinweg gleich bleiben oder aber von außen nach innen abnehmen kann. Durch den vorgeschlagenen polygonalen Querschnitt kann eine formschlüssig drehfeste Verbindung der Reduzierbuchse mit dem Spannfutter erreicht werden. Was die Verbindung der Reduzierbuchse mit dem Schaftwerkzeug betrifft, wird in dieser Druckschrift darauf hingewiesen, dass die Öffnung der Reduzierbuchse zur Aufnahme des Schaftwerkzeugs einen dem Schaftwerkzeug entsprechenden Querschnitt haben soll, der über die Länge variieren kann.

In der US 2,567,471 wird ebenfalls ein Hydrodehnspannfutter mit einer Reduzierbuchse vorgeschlagen. Auf die Art und Weise einer Verbindung der Reduzierbuchse mit einem Spannfutterkörper des Hydrodehnspannfutters oder einem in der Reduzierbuchse aufgenommenen Schaftwerkzeug wird jedoch nicht weiter eingegangen.

Die DE 30 39 267 A1 offenbart ein Hydrodehnspannfutter mit einer außenseitig konischen Reduzierbuchse und einer zylindrischen Bohrung zur Aufnahme eines zylindrischen Schaftes eines Werkzeugs.

Das aus der DE 10 2011 106 421 B3 bekannte Hydrodehnspannfutter hat eine Reduzierbuchse, die den Schaft eines Schaftwerkzeugs aufnimmt und spannt. Das Schaftwerkzeug ist mittels zweier an der Reduzierbuchse gehaltener Querbolzen, die in eine Vollringnut am Werkzeugschaft eingreifen, axial formschlüssig mit der Reduzierbuchse verbunden, um eine axiale Bewegung des Schaftwerkzeugs zu sperren. Durch diese Maßnahme, d.h. durch den Eingriff der Querbolzen in die Ringnut am Werkzeugschaft, wird aber keine formschlüssig drehfeste Verbindung der Reduzierbuchse mit dem Schaftwerkzeug erreicht. Die Reduzierbuchse ist ihrerseits über einen bodenseitig angeformten Gewindebolzen mit dem Spannfutter verschraubt. Die Verschraubung soll eine Justierung der axialen Relativlage der Reduzierbuchse im Spannfutter ermöglichen.

Ausgehend von der US 5,067,861 liegt der Erfindung nun die Aufgabe zugrunde, ein Hydrodehnspannfutter mit einem in einem Spannfutterkörper integrierten Hydrodehnspannmechanismus, der eine Dehnspannbuchse mit einer durchgehend zylindrischen Innenwand ohne einen radialen Durchbruch aufweist, kostengünstig und konstruktiv einfach so weiterzubilden, dass eine zuverlässige Spannung eines Schaftwerkzeugs, insbesondere Gewindebohrers, mit einem Schaft, der mit einer größeren Durchmessertoleranz, also z.B. h9, gefertigt ist, in einer Qualität gelingt, die einer wesentlich engeren Durchmessertoleranz, also z.B. h6, entspricht und die Übertragung höherer Drehmoment und eine gleichmäßige Verteilung der Spannkraft über die Reduzierbuchse auf das Schaftwerkzeug ermöglicht. Diese Aufgabe wird durch ein Hydrodehnspannfutter gemäß Anspruch 1 gelöst. Vorteilhafte Weiterbildungen sind Gegenstand abhängiger Ansprüche.

Ein erfindungsgemäßes Hydrodehnspannfutter weist einen in einem Spannfutterkörper integrierten Hydrodehnspannmechanismus mit einer Dehnspannbuchse und eine in der Dehnspannbuchse angeordneten Reduzierbuchse zur Aufnahme eines Schaftwerkzeugs, insbesondere Gewindebohrers, auf.

Hauptanwendungsgebiet des erfindungsgemäßen Hydrodehnspannfutters ist die Gewindeerzeugung, im Besonderen durch Gewindebohren oder Gewindeformen. Ein erfindungsgemäßes Hydrodehnspannfutter ist also insbesondere so ausgebildet, dass es - wie bei einem Gewindeschneidfutter üblich - zum Ausgleich von Synchronisationsfehlern zwischen Spindelvorschub und Steigung des herzustellenden Gewindes einen axialen Druck-/Zugkraftlängenausgleich sowie vorteilhaft außerdem einen Drehmomentausgleich ermöglicht. In einer bevorzugten Ausführungsform kann der Spannfutterkörper in einen Grundkörper und einem mit dem Grundkörper zumindest axialelastisch, vorzugsweise dreh- und axialelastisch, verbundenen Aufnahmekörper unterteilt, wobei der Hydrodehnspannmechanismus mit der in der Dehnspannbuchse aufgenommenen Reduzierbuchse in den Aufnahmekörper integriert ist. Die Verwendung des erfindungsgemäßen Hydrodehnspannfutters ist aber nicht auf die Gewindeerzeugung beschränkt, sondern universell für verschiedene Schaftwerkzeuge, z. B. Bohrer, Fraser, etc. geeignet.

Erfindungsgemäß ist die Reduzierbuchse außenumfangsseitig formschlüssig drehfest entweder unmittelbar oder mittelbar über die im Spannfutterkörper fest angeordnete Dehnspannbuchse mit dem Spannfutterkörper verbunden und innenumfangsseitig für eine formschlüssige drehfeste Verbindung mit dem Schaftwerkzeugs ausgebildet. Die Reduzierbuchse hat hierzu ein Außenmehrkantprofil, vorzugsweise ein Außenzweikantprofil (auch Schlüsselweite oder Außenzweiflach genannt), das in einem entsprechenden Innenmehrkantprofil, vorzugsweise einem Innenzweikantprofil (auch Innenzweiflach genannt), des Spannfutterkörpers formschlüssig aufgenommen ist, sowie ein Innenmehrkantprofil, vorzugsweise ein Innenvierkantprofil, zur formschlüssigen Aufnahme eines Außenmehrkants, vorzugsweise Außenvierkant, am Schaftende des Schaftwerkzeugs. Durch den so erreichten zweifachen Formschluss der Reduzierbuchse - einerseits mit dem Spannfutterkörper des Hydrodehnspannfutters und andererseits mit dem Schaft eines im Hydrodehnspannfutters einzuspannenden Schaftwerkzeugs - wird grundsätzlich unabhängig von der Toleranz des Schaftdurchmessers des Schaftwerkzeugs eine zuverlässig drehfeste Anordnung des Schaftwerkzeugs im Hydrodehnspannfutter erreicht. Verglichen mit herkömmlichen Hydrodehnspannfuttern ermöglicht die erfindungsgemäße Losung daher ohne zusätzliche Drehmomentmitnehmer für ein größeres Toleranzfeld, z. B. h9, hinsichtlich des Schaftdurchmessers des einzuspannenden Schaftwerkzeugs die Übertragung höherer Drehmomente, was bislang nur mit wesentlich engeren Toleranzen, z. B. h6, möglich war. Zudem können bei der erfindungsgemäßen Lösung dank der Reduzierbuchse verschiedene Schaftdurchmesser in ein und demselben Hydrodehnspannfutter gespannt werden. Erfindungsgemäß ist die Formschlussverbindung zwischen der Reduzierbuchse und dem Spannfutterkörper in axialer Richtung auf einen Längenendabschnitt der Reduzierbuchse beschränkt, und ist auch die Formschlussverbindung zwischen der Reduzierbuchse und dem Schaftwerkzeug in axialer Richtung auf einen Längenendabschnitt der Reduzierbuchse beschränkt. Durch die Verlagerung des Formschlusses zwischen der Reduzierbuchse und dem Spannfutterkörper auf einen Längenendabschnitt bleibt der axiale mittige Längenabschnitt der Reduzierbuchse zur Kraftübertragung von der Dehnspannbuchse des Hydrodehnmechanismus auf das Schaftwerkzeug uneingeschränkt nutzbar, wodurch eine gleichmäßige Verteilung der Spannkraft über die Reduzierbuchse auf das Schaftwerkzeug gewährleistet ist. Gleiches gilt für die Verlagerung des Formschluss zwischen der Reduzierbuchse und dem Schaftwerkzeug auf einen Längenendabschnitt der Reduzierbuchse.

Eine Modifizierung herkömmlicher Hydrodehnspannfutter gelingt relativ einfach durch einen Austausch oder eine Umgestaltung der Dehnspannbuchse so, dass der oben erwähnte zweifache Formschluss zwischen Dehnspannbuchse und Reduzierbuchse bzw. zwischen Reduzierbuchse und Schaftwerkzeug erhalten wird.

Dank des außenumfangsseitigen Formschlusses der Reduzierbuchse mit dem Spannfutterkörper bietet das erfindungsgemäße Hydrodehnspannfutter des Weiteren die Möglichkeit einer zentrischen Kuhl-/Schmiermittelzufuhr entlang der Drehachse von einer werkzeugmaschinenspindelseitigen Einspeisestelle durch das Hydrodehnspannfutter hindurch zu einem eingespannten Schaftwerkzeug. Beispielsweise kann hierzu ein an sich bekanntes MMS (Minimalmengenschmierung)-Übergabesystem verwendet werden.

Die Erfindung gestattet daher eine konstruktiv einfach zu bewältigende und damit kostengünstige Modifizierung eines herkömmlichen Hydrodehnspannfutters so, dass ein Schaftwerkzeug mit einem Schaft, der mit einer größeren Durchmessertoleranz, also z.B. h9, gefertigt ist, in einer Qualität eingespannt werden kann, die einer wesentlich engeren Durchmessertoleranz, also z.B. h6, entspricht und die Übertragung höherer Drehmomente ermöglicht. Zusätzlich bietet das erfindungsgemäße Hydrodehnspannfutter die Möglichkeit einer zentrischen Kuhl-/Schmiermittelzufuhr zu einem eingespannten Schaftwerkzeug.

Die Reduzierbuchse kann, wie bereits erwähnt, entweder unmittelbar oder über die im Spannfutterkörper fest aufgenommene Dehnspannbuchse des Hydrodehnspannmechanismus mittelbar mit dem Spannfutterkörper formschlüssig verbunden sein. Der mittelbare Formschluss über die Dehnspannbuchse ist in fertigungstechnischer Hinsicht vorzuziehen, da die Dehnspannbuchse sich im Zustand vor ihrem Einbau in den Spannfutterkörper allseitig leicht zugänglich bearbeiten lässt.

In einer derzeit bevorzugten Weiterbildung des erfindungsgemäßen Hydrodehnspannfutters ist die Formschlussverbindung zwischen der Reduzierbuchse und dem Spannfutterkörper an dem in axialer Richtung inneren Längenendabschnitt der Reduzierbuchse vorgesehen. Bei dieser Weiterbildung lasst sich der außenumfangsseitige Formschluss beispielsweise auf einem durchmesserreduzierten inneren Längenendabschnitt der Reduzierbuchse problemlos realisieren. Der innere Längenendabschnitt kann hierzu also einen gegenüber dem in axialer Richtung äußeren Längenendabschnitt und einem zwischen dem inneren und äußeren Längenendabschnitt liegenden mittigen Längenabschnitt kleineren Außendurchmesser haben. Durch den kleineren Durchmesser des inneren Längenendabschnitts wird die Länge des auf Passung zu bearbeitenden mittigen Längenabschnitts der Reduzierbuchse, der zur Übertragung der radialen Spannkraft von der Dehnspannbuchse auf ein Schaftwerkzeug genutzt wird, verkürzt.

Analog zum Formschluss zwischen der Reduzierbuchse und dem Spannfutterkörper ist die Formschlussverbindung zwischen der Reduzierbuchse und dem Schaftwerkzeug vorzugsweise an dem in axialer Richtung inneren, Längenendabschnitt der Reduzierbuchse vorgesehen.

Durch die Lagebeschränkung der Formschlussverbindung der Reduzierbuchse mit dem Spannfutterkörper und der Formschlussverbindung der Reduzierbuchse mit dem Schaftwerkzeug in axialer Richtung auf einen gemeinsamen, im Besonderen den in axialer Richtung inneren, Längenendabschnitt der Reduzierbuchse lässt sich eine Torsion der Reduzierbuchse minimieren oder verhindern.

Die Reduzierbuchse kann des Weiteren an ihrem in axialer Richtung äußeren Längenendabschnitt einen an einer werkzeugseitigen Stirnseite des Spannfutterkörpers axial abgestützten Stützflansch aufweisen. Dadurch lässt sich die axiale Lage der Reduzierbuchse innerhalb der Dehnspannbuchse des Hydrodehnspannmechanismus und damit die axiale Lage eines eingespannten Schaftwerkzeugs relativ zum Spannfutterkörper in axialer Richtung beschränken.

Im Folgenden wird anhand der beigefügten Zeichnungen eine Ausführungsform eines erfindungsgemäßen Hydrodehnspannfutters erläutert.
Fig. 1 zeigt eine Seitenansicht einer Ausführungsform eines erfindungsgemäßen Hydrodehnspannfutters mit einer Reduzierbuchse.
Fig. 2 zeigt einen axialen Längsschnitt der Ausführungsform in einem größeren Maßstab.
Fig. 3 zeigt einen Querschnitt der Ausführungsform zur Veranschaulichung des zweifachen Formschlusses der Reduzierbuchse.
Fig. 4 zeigt einen axialen Längsschnitt der Ausführungsform in perspektivischer Darstellung.
Fig. 5a bis 5e zeigen die Reduzierbuchse in verschiedenen Ansichten.
Fig. 6 zeigt schematisch die Anordnung der Reduzierbuchse in einem Aufnahmekörper des Spannfutterkörpers des Hydrodehnspannfutters.

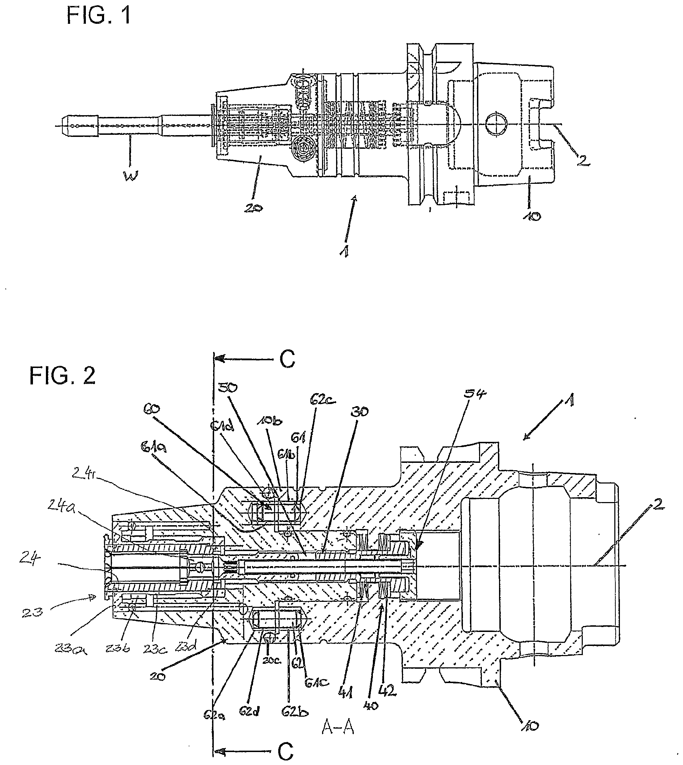

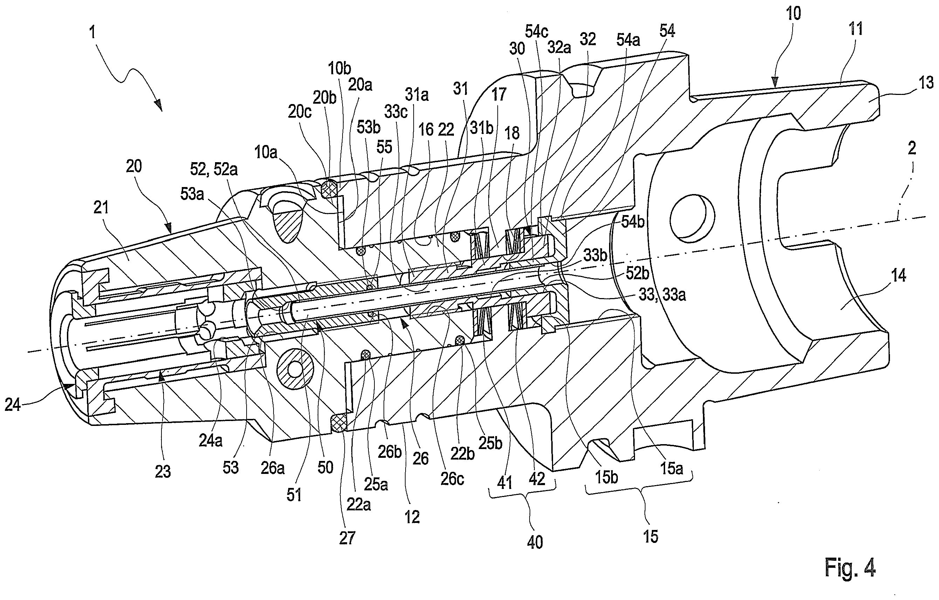

Das Hydrodehnspannfutter 1 hat einen im Wesentlichen zweiteiligen Spannfutterkörper, der aus einem Grundkörper 10 und einem Aufnahmekörper 20 gebildet ist und sich im Detail aus Fig. 2 und Fig. 4 ergibt. Der Grundkörper 10 und der Aufnahmekörper 20 sind für eine Drehmomentübertragung über eine Drehmomentmitnahmeeinrichtung 60 drehelastisch und für einen axialen Längenausgleich über eine Federeinrichtung 40 axialelastisch miteinander verbunden. Das Hydrodehnspannfutter 1 weist des Weiteren eine sich entlang der Drehachse 2 erstreckende, zentrisch angeordnete Kühlschmiermittelübergabeeinheit 50 auf.

Der Grundkörper 10 ist funktional in einen Schaftabschnitt 11 und einen Hülsenabschnitt 12 unterteilt, die sich entlang der Drehachse 2 des Hydrodehnspannfutters 1 erstrecken. Der Schaftabschnitt 11 dient zur Ankopplung des Hydrodehnspannfutters 1 an eine (nicht gezeigte) Schaftwerkzeugmaschinenspindel oder ein (ebenfalls nicht gezeigtes) Schaftwerkzeugmodul eines modular aufgebauten Schaftwerkzeugsystems. Der Schaftabschnitt 11 hat hierzu einen Hohlschaftkegel 13 mit einer axialen Innenausnehmung 14 und einer über die Innenausnehmung 14 zugänglichen, werkzeugmaschinenseitig offenen, zentrischen Ausnehmung in Form einer Stufenbohrung 15. Die Stufenbohrung 15 weist in Richtung Aufnahmekörper 20 (in Fig. 2 und Fig. 4 von rechts nach links) einen in die Innenausnehmung 14 des Hohlschaftkegels 13 mündenden Gewindebohrungsabschnitt 15a sowie einen an den Gewindebohrungsabschnitt 15a anschließenden zylindrischen Bohrungsabschnitt 15b kleineren Durchmessers auf. Im zylindrischen Bohrungsabschnitt 15b ist eines (42) von zwei Federelementen 41, 42 der Federeinrichtung 40 aufgenommen. Der den Schaftabschnitt 11 in Richtung Aufnahmekörper 20 axial verlängernde Hülsenabschnitt 12 weist eine werkzeugseitig offene, zentrische Führungsbohrung 16 auf. Die Führungsbohrung 16 ist durch eine radiale Trennwand 17 von der axialen Ausnehmung 15 des Schaftabschnitts 11 getrennt. In der Führungsbohrung 16 ist das andere (41) der beiden Federelemente 41, 42 der Federeinrichtung 40 aufgenommen. In der radialen Trennwand 17 ist ein axialer Durchbruch in Form einer zentrischen Durchgangsbohrung 18 vorgesehen. Die Führungsbohrung 16 des Hülsenabschnitts 12, die Durchgangsbohrung 18 in der radialen Trennwand 17 sowie die zentrische Ausnehmung 15 und die Innenausnehmung 14 des Schaftabschnitts 11 erstrecken sich längs der Drehachse 2 des Hydrodehnspannfutters 1.

Der Aufnahmekörper 20 ist funktional in einen Aufnahmeabschnitt 21 und einen Führungsabschnitt 22 unterteilt, die sich entlang der Drehachse 2 des Hydrodehnspannfutters 1 erstrecken. Der Aufnahmeabschnitt 21 dient zur Aufnahme und zum Spannen eines nur in Fig. 1 gezeigten Schaftwerkzeugs W und weist hierzu einen an sich bekannten Hydrodehnspannmechanismus 23 auf.

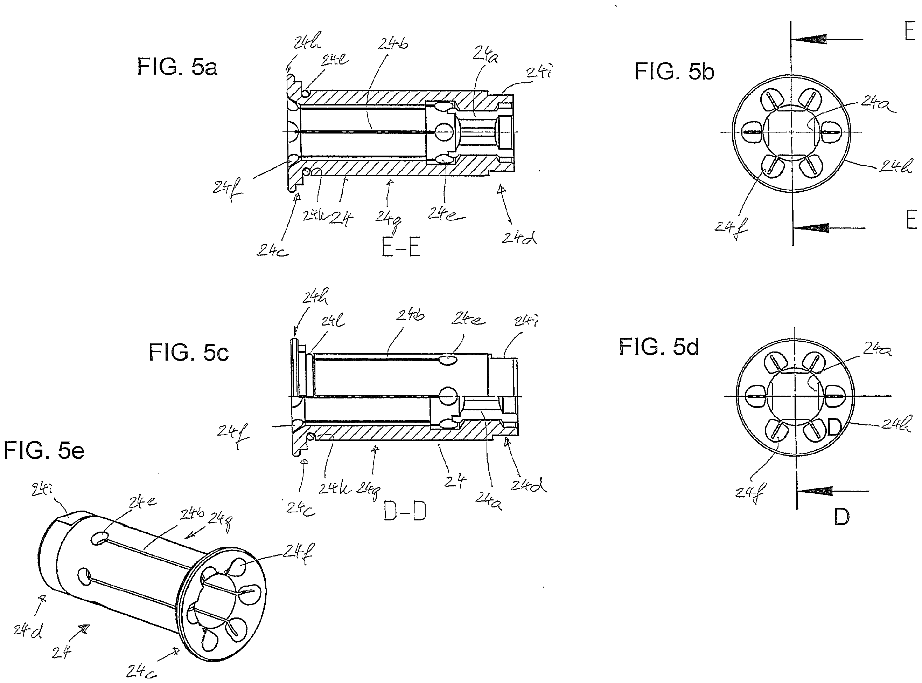

Der Hydrodehnspannmechanismus 23 umfasst in an sich bekannter Weise eine in den Aufnahmekörper 20 fest eingelötete oder auf andere Weise fest angeordnete hülsenartige Dehnspannbuchse 23a mit einer durchgehend glatten zylindrischen Innenwand , die eine im Aufnahmekörper 20 ausgebildete Hydrodehnkammer 23b dicht abschließt. Die Dehnspannbuchse 23a bildet damit einen einstückigen Bestandteil des Aufnahmekörpers 20 bzw. Spannfutterkörpers. Bei einer Druckbeaufschlagung der Hydrodehnkammer dehnt sich die Dehnspannbuchse 23a dank einer in ihrem axial mittigen Längenabschnitt weichelastischen Buchsenwandung 23c nach innen aus, wodurch eine in der Dehnspannbuchse passgenau aufgenommene Reduzierbuchse 24 kraftschlüssig gespannt wird. Die Reduzierbuchse 24 hat hierzu in ihrem axial mittigen Längenabschnitt 24g (vgl. Fig. 5a, 5c) eine Vielzahl von um die Drehachse 2 des Hydrodehnspannfutters 1 herum äquidistant um den Umfang verteilten Längsschlitzen 24b, die eine in Umfangsrichtung gleichmäßige Verteilung und Übertragung der durch die Dehnspannbuchse 23a des Hydrodehnspannmechanismus 23 ausgeübten Dehnspannkraft auf ein in der Dehnspannbuchse 23a aufgenommenes Schaftwerkzeugschaft W (vgl. Fig. 1) ermöglichen.

Der in Werkzeugvorschubrichtung (in Fig. 1, 2, 4 von rechts nach links) vordere oder äußere Längenendabschnitt 24c sowie der in Werkzeugvorschubrichtung hintere oder und innere Längenendabschnitt 24d der Reduzierbuchse 24 sind in Umfangsrichtung dagegen durchgängig, d.h. also ungeschlitzt, ausgebildet. Wie es in Fig. 5a bis 5e gezeigt ist, enden die Längsschlitze 24b innerends jeweils in einer Radialbohrung 24e, die durch die Hülsenwandung der Reduzierbuchse 24 hindurch ausgebildet ist, und außerends jeweils in einer von der vorderen Stirnseite her axial in die Reduzierbuchse 24 eingearbeitete konkave Vertiefung oder Aussparung 24f. Abgesehen von den Längsschlitzen 24b und Radialbohrungen 24e ist der axial mittige Längenabschnitt 24g der Reduzierbuchse 24 durchgängig zylindrisch, d.h. erweist im Besonderen keine seitlichen Abflachungen, Mitnehmerflächen, etc. auf. Im Vergleich zu dem mittigen Längenabschnitt 24g ist der vordere oder äußere Längenendabschnitt 24c durch einen radialen Stützflansch 24h im Durchmesser vergrößert und der hintere oder innere Längenendabschnitt 24d im Durchmesser geringfügig verkleinert.

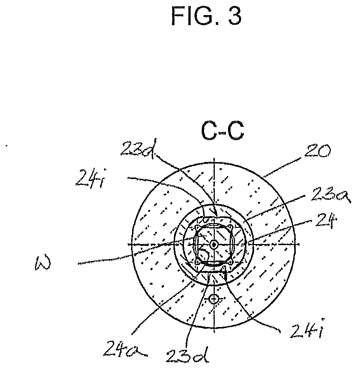

Die Reduzierbuchse 24 überbrückt den Durchmesserunterschied zwischen dem Innendurchmesser der Dehnspannbuchse 23a und dem Außendurchmesser des Schafts eines einzuspannenden Schaftwerkzeugs W (vgl. Fig. 1) und sieht eine formschlüssige Drehmomentmitnahme das Schaftwerkzeugs im Hydrodehnspannfutter 1 vor. Erfindungsgemäß ist die Reduzierbuchse 24 hierzu außenumfangsseitig formschlüssig drehfest mit dem Spannfutterkörper, im Besonderen dem Aufnahmekörper 20 des Spannfutterkörpers, verbunden. In der Ausführungsform ist die Formschlussverbindung zwischen der Reduzierbuchse 24 und dem Aufnahmekörper 20 an dem in axialer Richtung hinteren oder inneren durchmesserreduzierten Längenendabschnitt 24d der Reduzierbuchse 24 vorgesehen. Der außenumfangsseitige Formschluss lässt sich auf dem durchmesserreduzierten inneren Längenendabschnitt 24d der Reduzierbuchse 24 problemlos realisieren. Die Reduzierbuchse 24 hat hierzu im Besonderen ein Außenmehrkantprofil in Form eines Außenzweikants 24i, der in einem entsprechenden Innenmehrkantprofil in Form eines Innenzweikants 23d in der im Aufnahmekörper 20 fest aufgenommenen Dehnspannbuchse 23a formschlüssig aufgenommen ist (vgl. Fig. 3, Fig. 5e).

Erfindungsgemäß wird des Weiteren ein zu spannendes Schaftwerkzeug W im Hydrodehnspannmechanismus 23 über die Reduzierbuchse 24 mit positiver Drehmomentmitnahme zwischen seinem Schaft und der Reduzierbuchse 24 gespannt. Die Reduzierbuchse 24 hat hierzu innenumfangsseitig eine Innenvierkantkontur 24a zur formschlüssigen Aufnahme eines in Fig. 3 zu erkennenden Außenvierkantabschnitts am Schaftende des Schafts des Schaftwerkzeugs W. Die Formschlussverbindung zwischen der Reduzierbuchse 24 und dem Schaftwerkzeug W ist in der Ausführungsform an dem inneren oder hinteren Längenendabschnitt 24d der Reduzierbuchse 24 vorgesehen.

Durch zweifachen Formschluss der Reduzierbuchse 24 - einerseits mit dem Aufnahmekörper 20 des Spannfutterkörpers des Hydrodehnspannfutters 1 und andererseits mit dem Schaft eines im Hydrodehnspannfutters 1 einzuspannenden Schaftwerkzeugs W - wird im Wesentlichen unabhängig von der Größe des Toleranzfeldes - ob z.B. h9 oder h6 - des Schaftdurchmessers des Schaftwerkzeugs W bereits eine zuverlässig drehfeste Anordnung des Schaftwerkzeugs W im Hydrodehnspannfutter 1 erreicht. Die Drehmomentübertragung vom Spannfutterkörper (Grundkörper 10 und Aufnahmekörper 20) auf das Schaftwerkzeug W wird somit in erster Linie durch den zweifachen Formschluss zwischen der Reduzierbuchse 24 und dem Spannfutterkörper (Grundkörper 10 und Aufnahmekörper 20) und zwischen der Reduzierbuchse 24 und dem Schaftwerkzeug W erreicht. Der durch den Hydrodehnspannmechanismus 1 erreichte Kraftschluss zwischen der Reduzierbuchse 24 und der Dehnspannbuchse 23a muss daher im Wesentlichen nur noch die Übertragung axialer Zug-/Druckkräfte vom Spannfutterkörper auf das Schaftwerkzeug W gewährleisten.

Verglichen mit herkömmlichen Hydrodehnspannfuttern ermöglicht die erfindungsgemäße Lösung daher für ein größeres Toleranzfeld, z. B. h9, hinsichtlich des Schaftdurchmessers eines einzuspannenden Schaftwerkzeugs W die Übertragung höherer Drehmomente, was bislang nur mit Wesentlich engeren Toleranzen, z. B. h6, möglich war. Zudem können bei der erfindungsgemäßen Lösung dank der Reduzierbuchse 24 verschiedene Schaftdurchmesser in ein und demselben Hydrodehnspannfutter 1 gespannt werden. Die Erfindung gestattet daher eine konstruktiv einfach zu bewältigende und damit kostengünstige Modifizierung eines herkömmlichen Hydrodehnspannfutters so, dass ein Schaftwerkzeug W mit einem Schaft, der mit einer größeren Durchmessertoleranz, also z.B. h9, gefertigt ist, in einer Qualität eingespannt werden kann, die einer wesentlich engeren Durchmessertoleranz, also z.B. h6, entspricht und die Übertragung höherer Drehmoment ermöglicht.

Durch die Lagebeschränkung der Formschlussverbindung der Reduzierbuchse 24 mit dem Spannfutterkörper und der Formschlussverbindung der Reduzierbuchse 24 mit dem Schaftwerkzeug W in axialer Richtung auf einen gemeinsamen Längenabschnitt der Reduzierbuchse 24, im Besonderen den inneren oder hinteren Längenendabschnitt 24d der Reduzierbuchse 24, lässt sich eine Torsion der Reduzierbuchse 24 minimieren.

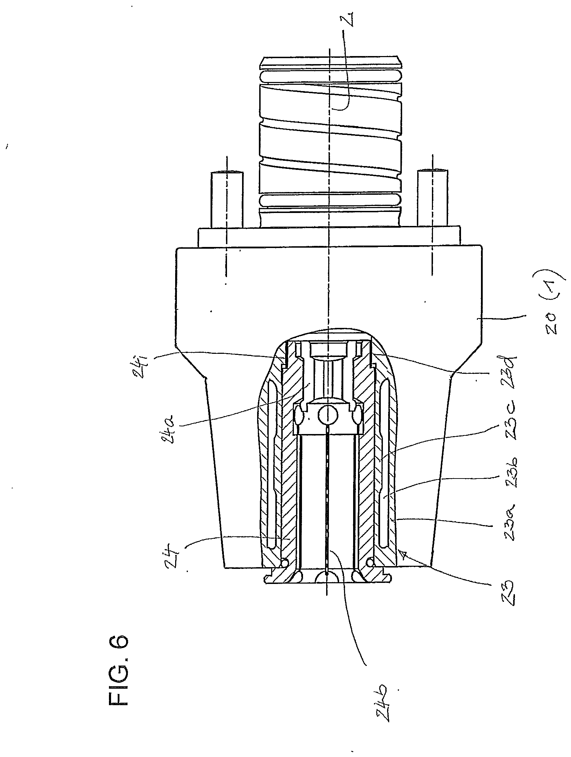

Die Reduzierbuchse 24 hat an ihrem vorderen oder äußeren Längenendabschnitt 24c den oben erwähnten radial vorspringenden Stützflansch 24h, der an einer werkzeugseitigen Stirnseite des Aufnahmekörpers 20 axial abgestützt ist, wie es im Besonderen z.B. aus Fig. 6 ersichtlich ist. Der Stützflansch 24h legt die Lage der Reduzierbuchse 24 innerhalb der Dehnspannbuchse 23a des Hydrodehnspannmechanismus 23 fest und beschränkt damit auch die axiale Lage eines eingespannten Schaftwerkzeugs W relativ zum Spannfutterkörper. Axial innerhalb des Stützflansches 24h zwischen dem äußeren oder vorderen Längenendabschnitt 24c und dem mittigen Längenabschnitt 24g weist die Reduzierbuchse 24 außenumfangsseitig eine Ringnut 24k auf, in der eine O-Ring-Dichtung 24l aufgenommen ist, die das Fügespiel zwischen der Reduzierbuchse 24 und der Dehnspannbuchse 23a abdichtet.

Der den Aufnahmeabschnitt 21 in Richtung Grundkörper 10 verlängernde zylindrische Führungsabschnitt 22 ist in der Führungsbohrung 16 des Grundkörpers 10 mit einem definierten seitlichen Spiel axialbeweglich aufgenommen. Der Ringspalt zwischen dem Außenumfang des Führungsabschnitts 22 des Aufnahmekörpers 20 und dem Innenumfang der Führungsbohrung 16 des Grundkörpers 10 ist über zwei O-Ring-Dichtungen 25a, 25b abgedichtet, die jeweils in einer außenumfangsseitigen Ringnut 22a, 22b des Führungsabschnitts 22 aufgenommen sind. Durch den Führungsabschnitt 22 hindurch verläuft eine zentrische Stufenbohrung 26, die in Richtung Grundkörper 10 (in Fig. 2 und Fig. 4 von links nach rechts betrachtet) einen zylindrischen Bohrungsabschnitt 26a, einen im Durchmesser kleineren Gewindebohrungsabschnitt 26b sowie einen im Durchmesser größeren Gewindebohrungsabschnitt 26c aufweist.

Der Aufnahmekörper 20 ist im Grundkörper 10 über den Anker 30 verankert. Der Anker 30 ist funktional in einen die Durchgangsbohrung 18 in der radialen Trennwand 17 des Grundkörpers 10 durchgreifenden Ankerschaft 31 und einen am Ankerschaft 31 angeordneten Ankerkopf 32 unterteilt. In der Ausführungsform ist der Anker 30 in der Art einer Kopfschraube ausgebildet. Der Ankerschaft 31 ist über ein an seinem werkzeugseitigen Endabschnitt 31a vorgesehenes Außengewinde in den Gewindebohrungsabschnitt 26c größeren Durchmessers des Führungsabschnitts 22 des Aufnahmekörpers 20 eingeschraubt und über einen zylindrischen Mittelabschnitt 31b mit einem definierten seitlichen Spiel in der Durchgangsbohrung 18 der radialen Trennwand 17 axial- und drehbeweglich aufgenommen. Der Aufnahmekörper 20 erhält dadurch über den Anker 30 eine zusätzliche axiale Führung im Grundkörper 10. Der Ankerkopf 32 hat einen zylindrischen Außenumfang 32a und bildet einen Anschlag für das Federelement 42. In der Ausführungsform sind der Ankerschaft 31 und der Ankerkopf 32 einstückig ausgebildet. Der Anker 30 ist daher als solcher durch Verschraubung relativ zum Aufnahmekörper 20 an diesem axial verstellbar angeordnet. Durch den Anker 30 hindurch verläuft eine axiale Durchgangsbohrung in Form einer Stufenbohrung 33. Die Stufenbohrung 33 weist in Richtung Aufnahmekörper 20 (in Fig. 2 und Fig. 4 von rechts nach links betrachtet) einen Bohrungsabschnitt 33a größeren Durchmessers, einen Innensechskantabschnitt 33b und einen Bohrungsabschnitt 33c kleineren Durchmessers auf. In den Innensechskantabschnitt 33b kann in Fig. 2 und Fig. 4 von rechts über die Innenausnehmung 14 im Hohlschaftkegel 13, die Ausnehmung 15 im Schaftabschnitt 11 des Grundkörpers 10 und den Bohrungsabschnitt 33a größeren Durchmessers der Stufenbohrung 33 im Anker 30 ein passender Schaftwerkzeugschlüssel eingeführt werden, um den Anker 30 durch Verschraubung im Grundkörper 10 axial zu verstellen.

Die die Federvorspannung zwischen Grundkörper 10 und Aufnahmekörper 20 bewirkende Federeinrichtung 40 ist, wie bereits erwähnt, durch die beiden Federelemente 41, 42 realisiert, wobei das Federelement 41 zwischen der werkzeugmaschinenseitigen Stirnseite des Führungsabschnitts 22 des Aufnahmekörpers 20 und der werkzeugseitigen Stirnseite der radialen Trennwand 17 des Grundkörpers 10 und das Federelement 42 zwischen der werkzeugmaschinenseitigen Stirnseite der radialen Trennwand 17 und der werkzeugseitigen Stirnseite des Ankerkopfs 32 des Ankers 30 angeordnet ist. Die beiden Federelemente 41, 42 sind jeweils als ein Federpaket aus mehreren Tellerfedern aus Metall und/oder Polymermaterial gebildet und haben dieselbe Federkennlinie. Fig. 2 und Fig. 4 zeigen im Besonderen, dass die Federpakete jeweils aus drei Tellerfedern zusammengesetzt sind, die insgesamt in Reihe geschaltet sind, wobei allerdings zwei der drei Tellerfedern parallel geschaltet sind. Der Ankerschaft 31 erstreckt sich mittig durch die beiden Federelemente 41, 42 hindurch. Die beiden Federelemente 41, 42 sehen einen für den axialen Längenausgleich erforderlichen geringen axialen Abstand zwischen Grundkörper 10 und Aufnahmekörper 20 vor und ermöglichen einen Längenausgleich sowohl in Druck- wie auch in Zugrichtung entlang der Drehachse 2 des Hydrodehnspannfutters 1. Eine Verschraubung des Ankers 30 relativ zum Aufnahmekörper 20 bewirkt eine synchrone Änderung der Federvorspannung oder des Federwegs der beiden Federelemente 41, 42. Zur Einstellung der Federvorspannung der Federeinrichtung 40 wird der Anker 30, wie oben erwähnt, über die Innenausnehmung 14 des Hohlschaftkegels 13 und die an diese anschließende, zentrische Ausnehmung 15 des Schaftabschnitts 11 mittels eines geeigneten Schaftwerkzeugschlüssels betätigt.

Zur Drehmomentübertragung zwischen Grundkörper 10 und Aufnahmekörper 20 sind die axial gegenüberliegenden Stirnseiten 10a, 20a des Grundkörpers 10 und Aufnahmekörpers 20 in Drehrichtung form- und kraftschlüssig miteinander verbunden. Die form- und kraftschlüssige Verbindung zwischen den gegenüberliegenden Stirnseiten 10a, 20a des Grundkörpers 10 und Aufnahmekörpers 20 wird durch zwei diametral angeordnete zylindrische Mitnehmerstifte 61, 62 realisiert, die von der Stirnseite 10a des Grundkörpers 10 aus axial vorspringen und in gegenüberliegende Eingriffsbohrungen 61a, 62a (Eingriffsöffnungen) am Aufnahmekörper 20 axial beweglich eingreifen. Die beiden Mitnehmerstifte 61, 62 sind jeweils über eine in einer axialen Aufnahmebohrung 61b, 62b (Aufnahmeöffnung) am Grundkörper 10 sitzenden Passhülse 61c, 62c aus einem elastischen Polymermaterial angeordnet und greifen jeweils axial beweglich in eine in der zugeordneten Eingriffsbohrung 61a, 62a am Aufnahmekörper 20 eingepasste Passhülse 61d, 62d aus einem elastischen Polymermaterial ein. Der Grundkörper 10 und Aufnahmekörper 20 sind daher in Dreh- bzw. Torsionsrichtung nicht starr sondern dank der elastischen Passhülsen 61c, 62c, 61d, 62d torsionsgedämpft drehelastisch miteinander verbunden. Fig. 2 und Fig. 4 zeigen, dass die durch die Mitnehmerstifte 61, 62 realisierte form- und kraftschlüssige Verbindung zwischen dem Grundkörper 10 und Aufnahmekörper 20 bei axialer Betrachtung radial außerhalb des Führungsabschnitts 22 des Aufnahmekörpers 20 erfolgt, wodurch ein hohes Drehmoment übertragen werden kann.

Wie sich aus Fig. 2 und Fig. 4 weiter ergibt, hat die Stirnseite 10a des Hülsenabschnitts 12 des Grundkörpers 10 einen außenumfangsseitig umlaufenden Ringvorsprung 10b, der einen zylindrischen Vorsprung 20b der Stirnseite 20a des Aufnahmekörpers 20 mit einem definierten seitlichen Spiel umgreift. Auf der Außenumfangsfläche des zylindrischen Vorsprung 20b des Aufnahmekörpers 20a sitzt eine O-Ring-Dichtung 27. Die O-Ring-Dichtung 27 ist damit zwischen der den zylindrischen Vorsprung 20b des Aufnahmekörpers 20 umgebenden, dem Grundkörper 10 zugewandten Ringfläche 20c und der dem Aufnahmekörper 20 zugewandten Stirnseite des Ringsvorsprungs 10b des Hülsenabschnitts 12 des Grundkörpers 10 angeordnet. Die O-Ring-Dichtung 27 bewirkt eine Abdichtung des für den Längenausgleich erforderlichen, durch die Federvorspannung sichergestellten axialen Spalts zwischen Grundkörper 10 und Aufnahmekörper 20 und sieht eine axiale Dämpfung zwischen Aufnahmekörper 20 und Grundkörper 10 vor. Durch den axialen Eingriff des zylindrischen Vorsprungs 20b des Aufnahmekörpers 20 in den Ringvorsprung 10b des Hülsenabschnitts 12 des Grundkörpers 10 wird des Weiteren zusätzlich zur axialen Führung durch den in der Führungsbohrung 16 des Hülsenabschnitts 12 aufgenommenen Führungsabschnitts 22 des Aufnahmekörpers 20 eine - wenn auch knapp bemessene - weitere axiale Führung des Aufnahmekörpers 20 relativ zum Grundkörper 10 erreicht.

Das in Fig. 1 bis 4 gezeigte Hydrodehnspannfutter 1 hat des Weiteren eine entlang der Drehachse 2 zentrisch durch die Hydrodehnspannfutter 1 verlaufende MMS (Minimalmengenschmierung)-Kühlschmiermittelübergabeeinheit 50, die einen zentrischen Kühlschmiermittelkanal 51 zur Zufuhr eines werkzeugmaschinenseitig zugeführten Kühlschmiermittels zu einem im Aufnahmekörper 20 aufgenommenen Schaftwerkzeug W definiert. Die Kühlschmiermittelübergabeeinheit 50 weist ein die Stufenbohrung 33 des Ankers 30 durchdringendes Kühlschmiermittelübergaberohr 52, eine in dem werkzeugseitig zugänglichen Gewindebohrungsabschnitt 26b kleineren Durchmessers des Führungsabschnitts 22 eingeschraubte axialen Einstellschraube 53 sowie ein in den werkzeugmaschinenseitig zugänglichen Gewindebohrungsabschnitt 15a der Ausnehmung 15 des Grundkörpers 10 eingeschraubtes Verschlusselement 54 (Schraubverschluss) auf. Das Kühlschmiermittelübergaberohr 52 ist an seinem werkzeugseitigen Endabschnitt 52a in einer axialen Durchgangsbohrung 53a der axialen Einstellschraube 53 mit einem definierten seitlichen Spiel axial beweglich aufgenommen. Das seitliche Spiel zwischen dem Außenumfang des Kühlschmiermittelübergaberohrs 52 und dem Innenumfang der axialen Einstellschraube 53 wird durch eine O-Ring-Dichtung 55 abgedichtet, die in einer innenumfangsseitigen Ringnut 53b der axialen Einstellschraube 53 angeordnet ist. Das Kühschmiermittelübergaberohr 52 erstreckt sich des Weiteren durch die den Anker 30 durchdringende Stufenbohrung 33 und ist an seinem werkzeugmaschinenseitigen Endabschnitt 52b in einer Durchgangsbohrung 54b des den Anker 30 werkzeugmaschinenseitig überlagernden Verschlusselements 54 fluiddicht eingepresst, d.h. mit dem Verschlusselement 54 dreh- und axialfest verbunden. Das Verschlusselement 54 weist außenumfangsseitig ein Außengewinde 54a auf, das in den Gewindebohrungsabschnitt 15a der Stufenbohrung 15 des Schaftabschnitts 11 des Grundkörpers 10 eingeschraubt ist. Das Verschlusselement 54 verhindert das Eindringen von Schmutzpartikel in Richtung der beiden Federelemente 41, 42 der Federeinrichtung 40 über den seitlichen Spalt zwischen Anker 30 und Grundkörper 10. Des Weiteren bildet das Verschlusselement 54, dessen axiale Position im Grundkörper 10 von der Stellung des Ankers 30 bzw. der axialen Einstellschraube 53 unabhängig ist, eine Schnittstelle zum Anschluss der Kühlschmiermittelübergabeeinheit 50 an eine werkzeugmaschinenseitig vorgesehene (nicht gezeigte) Kühlschmiermitteleinspeisestelle.

Wie es in Fig. 2, 4 gezeigt ist, hat das Verschlusselement 54 werkzeugseitig einen Rohrvorsprung 54c, der in den im Durchmesser vergrößerten Bohrungsabschnitt 33a der Stufenbohrung 33 des Ankers 30 eingreift, wodurch der Anker 30 eine zusätzliche Zentrierung und Befestigung erfährt. Eine Verdrehung des Verschlusselements 54 bewirkt eine axiale Verstellung des Kühlschmiermittelübergaberohrs 52 relativ zur axialen Einstellschraube 53 bzw. zum Anker 30.

Das erfindungsgemäße Hydrodehnspannfutter ist nicht auf die in Fig. 1 bis 4 gezeigte Ausführungsform beschränkt, sondern innerhalb des durch die Ansprüche definierten Umfangs modifizierbar.

So kann die Reduzierbuchse 24 statt mittelbar über die in den Spannfutterkörper, im Besonderen Aufnahmekörper 20 des Spannfutterkörpers, fest eingelötete oder auf andere Weise fest integrierte Dehnspannbuchse 23a des Hydrodehnspannmechanismus 23 unmittelbar mit dem Spannfutterkörper bzw. Aufnahmekörper 20 formschlüssig verbunden sein. Die unmittelbare formschlüssige Verbindung zwischen der Reduzierbuchse 24 und dem Spannfutterkörper kann axial innerhalb, d.h. in Vorschubrichtung des Hydrodehnspannfutters 1 hinter, der Dehnspannbuchse 23a des Hydrodehnspannmechanismus 23 oder aber axial außerhalb, d.h. in Vorschubrichtung des Hydrodehnspannfutters 1 vor, der Dehnspannbuchse 23a des Hydrodehnspannmechanismus 23 realisiert sein. Beispielsweise kann die Reduzierbuchse 24a durch einen Formschluss zwischen dem radialen Stützflansch 24h und der gegenüberliegenden Stirnseite der Dehnspannbuchse 23a oder der gegenüberliegenden Stirnseite des Aufnahmekörpers 20 in Drehrichtung festgelegt sein. Ein derartiger Formschluss lässt sich beispielsweise durch eine oder mehrere axiale Fortsätze, Nasen, Vorsprünge oder dergleichen an der spannfutterkörperseitigen Ringfläche des Stützflanschs 24h erreicht werden, der oder die in entsprechende Mitnehmernuten, -aussparungen oder dergleichen axial eingreifen, wenn die Reduzierbuchse 24 in axialer Richtung in die Dehnspannbuchse 23a eingeführt wird.

### Bezugszeichenliste

- 1: Hydrodehnspannfutter
- 2: Drehachse

- 10: Spannfutterkörper
- 10a: Stirnseite
- 10b: Ringvorsprung
- 11: Schaftabschnitt
- 12: Hülsenabschnitt
- 13: Hohlschaftkegel
- 14: Innenausnehmung
- 15: Stufenbohrung (zentrische Ausnehmung)
- 15a: Gewindebohrungsabschnitt
- 15b: Bohrungsabschnitt
- 16: Führungsbohrung
- 17: Trennwand
- 15: Ausnehmung
- 18: Durchgangsbohrung

- 20: Spannfutter
- 20a: Stirnseite
- 20b: zylindrischer Vorsprung
- 20c: Ringstufe
- 21: Aufnahmeabschnitt
- 22: Führungsabschnitt
- 23: Hydrodehnspannmechanismus
- 23a: Dehnspannbuchse
- 23b: Dehnkammer
- 23c: Buchsenwandung
- 23d: Innenzweikantprofil
- 24: Reduzierbuchse
- 24a: Innenvierkantprofil
- 24b: Längsschlitz
- 24c: äußerer oder vorderer Längenendabschnitt
- 24d: innerer oder hinterer Längenendabschnitt
- 24e: radiale Bohrung
- 24f: konkave Aussparung oder Vertiefung
- 24g: mittiger Längenabschnitt
- 24h: Stützflansch
- 24i: Außenzweikantprofil
- 24k: Ringnut
- 24l: O-Ring-Dichtung
- 25a: O-Ring-Dichtung
- 25b: O-Ring-Dichtung
- 22a: Ringnut
- 22b: Ringnut
- 26: Stufenbohrung
- 26a: Bohrungsabschnitt
- 26b: Gewindebohrungsabschnitt
- 26c: Gewindebohrungsabschnitt
- 27: O-Ring-Dichtung

- 30: Anker
- 31: Ankerschaft
- 32: Ankerkopf
- 31a: Endabschnitt
- 31b: Mittelabschnitt
- 32a: Außensechskantkontur
- 33: Stufenbohrung (Durchgangsbohrung)
- 33a: Gewindebohrungsabschnitt
- 33b: Bohrungsabschnitt
- 33c: Bohrungsabschnitt
- 40: Federeinrichtung
- 41: Federelement
- 42: Federelement

- 50: Kühlschmiermittelübergabeeinheit
- 51: Kühlschmiermittelkanal
- 52: Kühlschmiermittelübergaberohr
- 52a: Endabschnitt
- 52b: Endabschnitt
- 53: Einstellschraube
- 53a: Durchgangsbohrung
- 53b: Ringnut
- 54: Verschlusselement
- 54a: Außengewinde
- 54b: Durchgangsbohrung
- 54c: Rohrvorsprung
- 55: O-Ring-Dichtung

- 60: Drehmomentmitnahmeeinrichtung
- 61: Mitnehmerstift
- 62: Mitnehmerstift
- 61a: Eingriffsbohrung (Eingriffsöffnung)
- 62a: Eingriffsbohrung (Eingriffsöffnung)
- 61b: Aufnahmebohrung (Aufnahmeöffnung)
- 62b: Aufnahmebohrung (Aufnahmeöffnung)
- 61c: Passhülse
- 62c: Passhülse
- 61d: Passhülse
- 62d: Passhülse

## Patentansprüche

1. Hydrodehnspannfutter (1) mit einem in einem Spannfutterkörper (10, 20) integrierten Hydrodehnspannmechanismus (23), der eine Dehnspannbuchse (23a) mit einer durchgehend zylindrischen Innenwand aufweist, und einer in der Dehnspannbuchse (23a) angeordneten Reduzierbuchse (24) zur Aufnahme eines Schaftwerkzeugs (W), insbesondere Gewindebohrers, wobei
die Reduzierbuchse (24) durch ein Außenmehrkantprofil (24i), das in einem Innenmehrkantprofil (23d) des Spannfutterkörpers (10,20) formschlüssig aufgenommen ist, außenumfangsseitig formschlüssig drehfest mit dem Spannfutterkörper (10,20) verbunden ist, **dadurch gekennzeichnet, dass**
die Reduzierbuchse (24) durch ein Innenmehrkantprofil zur formschlüssigen Aufnahme eines Außenmehrkantprofils am Schaftende des Schaftwerkzeugs (W) innenumfangsseitig für eine formschlüssige drehfeste Verbindung mit dem Schaftwerkzeug (W) ausgebildet ist,
die Formschlussverbindung zwischen der Reduzierbuchse (24) und dem Spannfutterkörper (10, 20) in axialer Richtung auf einen Längenendabschnitt (24d) der Reduzierbuchse (24) beschränkt ist, und
die Formschlussverbindung zwischen der Reduzierbuchse (24) und dem Schaftwerkzeug (W) in axialer Richtung auf einen Längenendabschnitt (24d) der Reduzierbuchse (24) beschränkt ist.

2. Hydrodehnspannfutter (1) nach Anspruch 1, **dadurch gekennzeichnet, dass** die Formschlussverbindung zwischen der Reduzierbuchse (24) und dem Spannfutterkörper (10, 20) in axialer Richtung auf den inneren Längenendabschnitt (24d) der Reduzierbuchse (24) beschränkt ist.

3. Hydrodehnspannfutter (1) nach Anspruch 1, **dadurch gekennzeichnet, dass** der innere Längenendabschnitt (24a) gegenüber dem in axialer Richtung äußeren Längenendabschnitt (24c) und einem zwischen dem inneren und äußeren Längenendabschnitt (24d, 24c) liegenden mittigen Langenabschnitt (24g) einen kleineren Außendurchmesser hat.

4. Hydrodehnspannfutter (1) nach einem der Anspruche 1 bis 3, **dadurch gekennzeichnet, dass** die Reduzierbuchse (24) ein Außenzweikantprofil (24i) aufweist, das in einem Innenzweikantprofil (23d) des Spannfutterkörpers (10,20) aufgenommen ist.

5. Hydrodehnspannfutter (1) nach einem der Anspruche 1 bis 4, **dadurch gekennzeichnet, dass** die Formschlussverbindung zwischen der Reduzierbuchse (24) und dem Schaftwerkzeug (W) in axialer Richtung auf den inneren Längenendabschnitt (24d) der Reduzierbuchse (24) beschränkt ist.

6. Hydrodehnspannfutter (1) nach einem der Ansprüche 1 bis 5, **dadurch gekennzeichnet, dass** die Reduzierbuchse (24) ein Innenvierkantprofil (24a) zur formschlüssigen Aufnahme eines Außenvierkantprofils am Schaftende des Schaftwerkzeugs (W) aufweist.

7. Hydrodehnspannfutter (1) nach einem der Ansprüche 1 bis 6, **dadurch gekennzeichnet, dass** die Reduzierbuchse (24) an ihrem in axialer Richtung äußeren Längenendabschnitt (24c) einen an der Stirnseite des Spannfutterköpers (10, 20) axial abgestützten Stützflansch (24h) aufweist.

8. Hydrodehnspannfutter (1) nach einem der Ansprüche 1 bis 7, **gekennzeichnet durch** einen Spannfutterkörper (10, 20) mit einem Grundkörper (10) und einem mit dem Grundkörper (10) zumindest axialelastisch, vorzugsweise dreh- und axialelastisch, verbundenen Aufnahmekörper (20), wobei der Hydrodehnspannmechanismus (23) mit der in der Dehnspannbuchse (23a) aufgenommenen Reduzierbuchse (24) in den Aufnahmekörper (20) integriert ist.

## Claims

1. A hydraulic expansion chuck (1) with a hydraulic expansion mechanism (23) that is integrated into a chuck body (10, 20) and exhibits an expansion bushing (23a) with a continuous cylindrical interior wall, and a reducing bushing (24) arranged in the expansion bushing (23a) for accommodating a shank tool (W), in particular a tap drill, wherein
the outer circumference of the reducing bushing (24) is positively connected with the chuck body (10, 20) in a torque-proof manner by an outer polygonal profile (24i) which is positively accommodated in an inner polygonal profile (23d) of the chuck body (10, 20), **characterized in that**
the reducing bushing (24) is at its inner circumference designed to be positively connected with the shank tool (W) in a torque-proof manner, by an inner polygonal profile for the positive accommodation of an outer polygonal profile at the shank end of the shank tool (W),
the positive connection between the reducing bushing (24) and the chuck body (10, 20) is axially restricted to a longitudinal end section (24d) of the reducing bushing (24), and
the positive connection between the reducing bushing (24) and the shank tool (W) is axially restricted to a longitudinal end section (24d) of the reducing bushing (24).

2. The hydraulic expansion chuck (1) according to claim 1, **characterized in that** the positive connection between the reducing bushing (24) and the chuck body (10, 20) is axially restricted to the inner longitudinal end section (24d) of the reducing bushing (24).

3. The hydraulic expansion chuck (1) according to claim 1, **characterized in that** the inner longitudinal end section (24a) has a smaller outer diameter by comparison to the axially outer longitudinal end section (24c) and a central longitudinal section (24g) lying between the inner and outer longitudinal end sections (24d, 24c).

4. The hydraulic expansion chuck (1) according to one of the claims 1 to 3, **characterized in that** the reducing bushing (24) comprises an outer two-edge profile (24i) which is accommodated in an inner two-edge profile (23d) of the chuck body (10, 20).

5. The hydraulic expansion chuck (1) according to one of the claims 1 to 4, **characterized in that** the positive connection between the reducing bushing (24) and the shank tool (W) is axially restricted to the inner longitudinal end section (24d) of the reducing bushing (24).

6. The hydraulic expansion chuck (1) according to one of the claims 1 to 5, **characterized in that** the reducing bushing (24) exhibits an inner four-edge profile (24a) for the positive accommodation of an outer four-edge profile at the shank end of the shank tool (W).

7. The hydraulic expansion chuck (1) according to one of the claims 1 to 6, **characterized in that** the axially outer longitudinal end section (24c) of the reducing bushing (24) further exhibits a supporting flange (24h) that axially abuts against a tool-side face of the chuck body (10, 20).

8. The hydraulic expansion chuck (1) according to one of the claims 1 to 7, **characterized by** a chuck body (10, 20) with a base body (10) and a receptacle (20) joined with the base body (10) at least in an axially elastic, preferably in a torsionally and axially elastic, manner, wherein the hydraulic expansion mechanism (23) with the reducing bushing (24) accommodated in the expansion bushing (23a) is integrated into the receptacle (20).

## Revendications

1. Mandrin hydraulique pince de serrage (1) avec un mécanisme hydraulique pince de serrage (23) intégré dans un corps de mandrin de serrage (10, 20), qui présente une douille pince de serrage (23a) avec une paroi intérieure cylindrique en continu, et avec une douille de réduction (24) agencée dans la douille pince de serrage (23a) pour la réception d'un outil à tige (W), en particulier d'un taraud, dans lequel
la douille de réduction (24) est reliée côté périphérique extérieur par correspondance de forme solidaire en rotation au corps de mandrin de serrage (10, 20) par un profil à plusieurs côtés extérieur (24i), qui est reçu par correspondance de forme dans un profil à plusieurs côtés intérieur (23d) du corps de mandrin de serrage (10, 20), **caractérisé en ce que**
la douille de réduction (24) est réalisée côté périphérique intérieur pour une liaison par correspondance de forme solidaire en rotation à l'outil à tige (W) par un profil à plusieurs côtés intérieur pour la réception par correspondance de forme d'un profil à plusieurs côtés extérieur au niveau de l'extrémité de tige de l'outil à tige (W),
la liaison par correspondance de forme entre la douille de réduction (24) et le corps de mandrin de serrage (10, 20) est limitée dans la direction axiale à une section d'extrémité de longueur (24d) de la douille de réduction (24), et
la liaison par correspondance de forme entre la douille de réduction (24) et l'outil à tige (W) est limitée dans la direction axiale à une section d'extrémité de longueur (24d) de la douille de réduction (24).

2. Mandrin hydraulique pince de serrage (1) selon la revendication 1, **caractérisé en ce que** la liaison par correspondance de forme entre la douille de réduction (24) et le corps de mandrin de serrage (10, 20) est limitée dans la direction axiale à la section d'extrémité de longueur intérieure (24d) de la douille de réduction (24).

3. Mandrin hydraulique pince de serrage (1) selon la revendication 1, **caractérisé en ce que** la section d'extrémité de longueur intérieure (24a) a un plus petit diamètre extérieur que la section d'extrémité de longueur extérieure (24c) dans la direction axiale et une section de longueur médiane (24g) située entre la section d'extrémité de longueur intérieure et extérieure (24d, 24c).

4. Mandrin hydraulique pince de serrage (1) selon l'une quelconque des revendications 1 à 3, **caractérisé en ce que** la douille de réduction (24) présente un profil à deux côtés extérieur (24i), qui est reçu dans un profil à deux côtés intérieur (23d) du corps de mandrin de serrage (10, 20).

5. Mandrin hydraulique pince de serrage (1) selon l'une quelconque des revendications 1 à 4, **caractérisé en ce que** la liaison par correspondance de forme entre la douille de réduction (24) et l'outil à tige (W) est limitée dans la direction axiale à la section d'extrémité de longueur intérieure (24d) de la douille de réduction (24).

6. Mandrin hydraulique pince de serrage (1) selon l'une quelconque des revendications 1 à 5, **caractérisé en ce que** la douille de réduction (24) présente un profil à quatre côtés intérieur (24a) pour la réception par correspondance de forme d'un profil à quatre côtés extérieur au niveau de l'extrémité de tige de l'outil à tige (W).

7. Mandrin hydraulique pince de serrage (1) selon l'une quelconque des revendications 1 à 6, **caractérisé en ce que** la douille de réduction (24) présente au niveau de sa section d'extrémité de longueur extérieure (24c) dans la direction axiale une bride de support (24h) supportée axialement au niveau du côté frontal du corps de mandrin de serrage (10, 20).

8. Mandrin hydraulique pince de serrage (1) selon l'une quelconque des revendications 1 à 7, **caractérisé par** un corps de mandrin de serrage (10, 20) avec un corps de base (10) et un corps de réception (20) relié au corps de base (10) au moins de manière axialement élastique, de préférence élastique en rotation et axialement élastique, dans lequel le mécanisme hydraulique pince de serrage (23) est intégré dans le corps de réception (20) avec la douille de réduction (24) reçue dans la douille pince de serrage (23a).
